# EUROPEAN PATENT SPECIFICATION

(11) **EP 4 321 945 B1**
(45) Date of publication and mention of the grant of the patent: **19.03.2025**
(21) Application number: 23185341.7
(22) Date of filing: 13.07.2023
(51) Int. Cl.: G05B 19/042, G05B 19/418, G05B 17/02

(54) **CONFIGURATION OF CONTROL DEVICES IN A PLANT FOR PRODUCING FOOD PRODUCTS**
KONFIGURATION VON STEUERVORRICHTUNGEN IN EINER ANLAGE ZUR HERSTELLUNG VON LEBENSMITTELPRODUKTEN
CONFIGURATION DE DISPOSITIFS DE COMMANDE DANS UNE INSTALLATION DE PRODUCTION DE PRODUITS ALIMENTAIRES

(30) Priority: 12.08.2022 EP 22190264
(43) Date of publication of application: 14.02.2024
(73) Proprietor: Tetra Laval Holdings & Finance S.A., 1009 Pully (CH)
(72) Inventor: Gunnarsson, Fredrik, 22186 Lund (SE); Simonsson, Micael, 22186 Lund (SE); Gunnarsson, Victor, 22186 Lund (SE); Luedtke, Jakob, 22186 Lund (SE)
(74) Representative: Tetra Pak - Patent Attorneys SE

(56) References cited:
- WO-A1-91/00997
- US-A1- 2014 058 534
- US-A1- 2022 163 959
- KARHELA: "A Software Architecture for Configuration and Usage of Process Simulation Models Software Component Technology and XML-based Approach", THESIS - PHD THESIS. HELSINKI UNIVERSITY OF TECHNOLOGY,, 11 December 2002 (2002-12-11), pages 1 - 129, XP008141584

## Description

### Technical Field

The present disclosure generally relates to production of food products, and in particular to a technique of configuring control devices for closed-loop control in food product production.

### Background

A primary requirement in food production is to create a product that can be packaged, sold, and subsequently consumed. This involves developing a mix of ingredients that can be combined efficiently and cost-effectively to be palatable. Products should be uniform in appearance and taste, and they should be produced in a way that makes them easy or convenient to consume, such as being divided into appropriate serving sizes or being appropriately packaged.

Food manufacturing requirements must prioritize safety and cleanliness to minimize the risk of food borne illness. Potentially hazardous ingredients must be stored and handled at safe temperatures, either by refrigeration or by heating ingredients hot enough to kill pathogens, and then cooling the resulting combination of ingredients quickly enough to prevent further bacterial growth. In addition, production equipment must be kept clean.

For example, the food product may be a packaged liquid food, such as a beverage, dairy product, sauce, oil, cream, custard, soup, etc.

Plants for food production are subject to specific and unique requirements. Specifically, the plants need to be configured to produce food products that not only comply with sanitary requirements but also meet subjective expectations of the consumer, such as mouthfeel, appearance, taste, etc. Further, the equipment in the plant may be re-configured to produce different food products from a variety of ingredients. In addition, the properties of an ingredient may differ over time or between different plants. For example, the content of raw milk may differ from time to time and between different regions.

A food production plant typically comprises a large number of components that are operated by a plurality of control devices. Given the specific and unique requirements of food production plants, as discussed above, it is a delicate undertaking to configure the respective control device to perform its respective task and to ensure that the control devices operate in unison to produce the food product in accordance with the requirements.

Current practice when setting up or modifying a food production plant is to have a commissioning engineer manually tune the respective control device until its performance is acceptable. This tuning is done by trial-and-error and is highly reliant on the experience of the commissioning engineer. The outcome is often less than perfect, potentially resulting in inefficient operation of the plant. In a food production plant, a large number of different components are used and/or combined in a variety of different ways. This means that the commissioning engineer will encounter a variety of control scenarios. Thus, even for an experienced commissioning engineer, it is a time-consuming task to configure control devices in a food production plant.

Related prior art is described by Tommi Karhela in "A Software Architecture for Configuration and Usage of Process Simulation Models: Software Component Technology and XML-based Approach," published by VTT Technical Research Centre of Finland, electronic ISBN 951-38-6012-4, in 2002.

### Summary

It is an objective to at least partly overcome one or more limitations of the prior art.

One such objective is to facilitate the work of configuring control devices in a plant for food production.

Another objective is to provide a technique that improves accuracy and consistency of control devices used for closed-loop control in a plant for food production.

One or more of these objectives, as well as further objectives that may appear from the description below, are at least partly achieved by a computer-implemented method of configuring a control device, a computer-readable medium, and a computer device according to the independent claims, embodiments thereof being defined by the dependent claims.

A first aspect of the invention is a computer-implemented method according to appended claim 1.

A second aspect of the invention is a computer-readable medium according to claim 13.

A third aspect of the invention is a computer device according to claim 14.

Still other objectives, aspects and embodiments, as well as features and advantages will appear from the following detailed description as well as from the drawings.

### Drawings

FIG. 1A is a flow diagram of an example plant for producing food products, and FIG. 1B is a schematic diagram of a production plant partitioned into individually controlled sub-systems.
FIG. 2 is a functional block diagram of an arrangement for closed-loop control of a sub-system in a production plant.
FIG. 3 is a block diagram of a computer device for configuring a control device to perform closed-loop control of a sub-system.
FIG. 4 is a flow chart of an example method of configuring a control device.
FIG. 5 is functional block diagram of the computer device in FIG. 3.
FIG. 6 illustrates an example sub-system and variables related to level control in the sub-system.

### Detailed Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Like reference signs refer to like elements throughout.

Well-known functions or constructions may not be described in detail for brevity and/or clarity. Unless otherwise defined, all terms (including technical and scientific terms) used herein have the same meaning as commonly understood by one of ordinary skill in the art to which this invention belongs.

As used herein, "food product" refers to any nutritious substance or combination of nutritious substances that a human or animal may eat or drink. Examples of food products include liquid food products such as beverages, dairy products, sauces, oils, creams, custards, etc., as well as solid food products such as meat, pasta, grains, flour, etc., and composite food products comprising both liquid and solid ingredients.

As used herein, "closed-loop control" (also known as "feedback control") is used in its ordinary meaning and refers a control procedure in which a process is controlled based on feedback from the process. Thereby, the process is automatically adjusted based on the feedback to achieve a desired output (target value) of the process.

As used herein, "open-loop control" (also known as "non-feedback control") is used in its ordinary meaning and refers to a control procedure in which a process controlled independent of its output, i.e., without feedback from the process.

As used herein, "and/or" includes any and all combinations of elements, a "set" of elements implies provision of one or more elements, and a "plurality" of elements implies provision of at least two elements.

As described in the Background section, production of food products differ in many ways from other types of production, for example by the need to adhere to food safety requirements, meet subjective expectations of the consumer, handle variations in properties of the ingredients, etc. A plant for food production is a complex industrial facility that includes a wide variety of components for processing ingredients into a food product. The same equipment is typically operated to produce different types of food products and therefore different components may need to be combined in different ways for use in different production lines. It is to be understood that whenever a new production line is set up by combining different components, the control system of the production line needs to be carefully adjusted to the combination of components in the production line, in view of the product to be produced and the ingredients to be processed. Thus, process control configuration is a common and time-consuming undertaking in plants of food production.

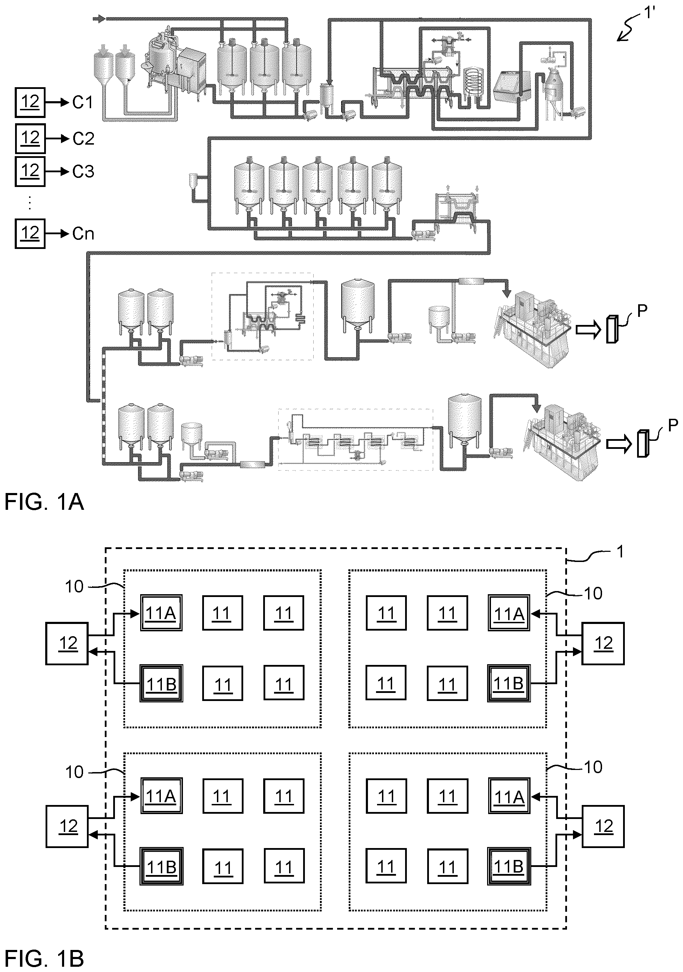

To generally illustrate the complexity of a plant for food production, reference is made to FIG. 1A which shows an example production line 1' for production of food products P in the form of packages of long-life stirred yoghurt. The production line 1' comprises a vast number of different components that are operated to jointly produce the products P. Without going into details of the example in FIG. 1A, it is realized that a food production plant may include individual components such as tanks, piping manifolds, valves, stirring devices, mixing devices, heaters, heat exchangers, pumps, flow controllers, vacuum chambers, etc., as well as integrated machines configured for a specific purpose such as filling machines, packaging machines, homogenizers, freezers, separators, deaerators, etc. Further, different variants of the respective component may be installed in the plant, for example tanks of different formats, pumps of different capacity and types, heat exchangers of different capacity and types, etc. It is also realized that one and the same component may operate on different fluids with different properties, depending on where it is installed in the production line 1'.

To facilitate production control, the production line 1' is typically divided into sub-systems, which are operated by a respective control device. FIG. 1A depicts a plurality of such control devices 12, which are configured to jointly operate the production line 1' to produce the food products P. Each control device 12 provides one or more control signals to its respective sub-system 10. In FIG. 1A, the control signals from the control devices 12 to n different sub-systems in the production line 1' are designated by C1-Cn.

The respective control device 12 may be a modular unit, for example a programmable logic controller (PLC), a microcontroller, a single-board computer, a programmable logic replay (PLR), or any other specific or generic computation device. In a variant, at least a subset of the control devices 12 are implemented on one and the same computation device.

It is realized that the control devices 12 may in turn be operated by one or more higher-level control devices, for example to synchronize the operation of different sub-systems. Alternatively, a group of control devices 12 may be communicatively connected to each other to synchronize their operation as required.

FIG. 1B is a schematic block diagram of an example production plant 1 comprising a plurality of sub-systems 10, which may be combined to form a production line 1', for example as shown in FIG. 1A. Each sub-system 10 is operated by a control device 12. The sub-system 10 comprises one or more controllable or actuatable components 11A (one shown) and one or more feedback components 11B (one shown), as well as further components 11. The sub-system 10 is configured to perform a task by use of its components. The task corresponds to a processing operation in the production of food products. The respective control device 12 operates its sub-system 10 by closed-loop control, by providing one or more control signals to the controllable component(s) 11A based on one or more feedback signals from the feedback component(s) 11B. Thus, in the context of the sub-system 10, the respective controllable component 11A may be denoted actuator and the respective feedback device 11B may be denoted sensor or measurement device. In a food production plant, the controllable component 11A may be a valve, a pump, a flow controller, a heat exchanger, or a heater, although other components are possible, such as a stirring device, a mixing device, an integrated machine, etc.

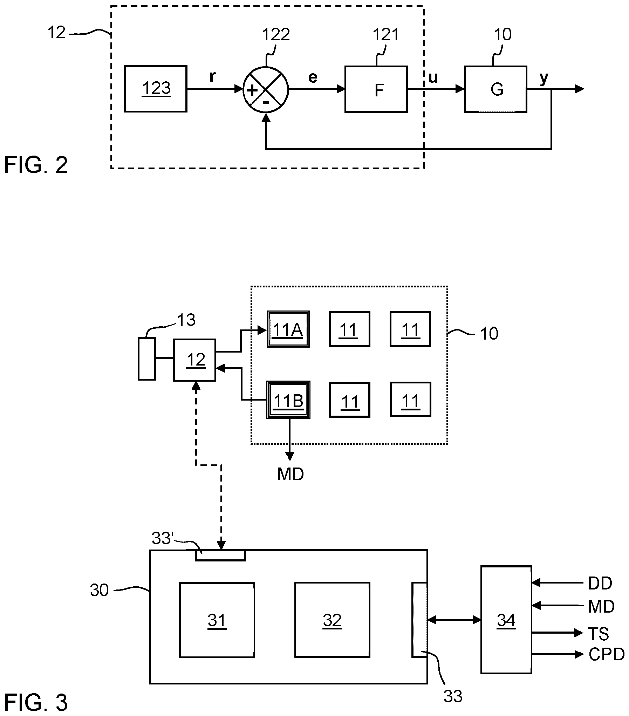

FIG. 2 is a schematic block diagram of an example control device 12, which is arranged to operate a sub-system 10 by closed-loop control. As noted, the sub-system 10 performs a processing operation (task). In FIG. 2, the processing operation is represented by a transfer function G, as is well-known in control theory. The transfer function G operates on one or more controllable variables, designated by **u,** and provides one or more observed variables, designated by y. In the context of FIG. 1B, the respective controllable variable u is given by a control signal to a controllable component 11A and the respective observed variable y is given by a feedback signal from a feedback component 11B.

In a food production plant, the observed variable may represent a flow rate, a temperature, a pressure, or a fluid level, although other physical properties are also possible, such as concentration, viscosity, etc.

In FIG. 2, the control device 12 comprises a controller 121 with a control algorithm, here represented by a transfer function F. The controller 121 is configured to calculate a current value of the respective controllable variable u based on a current value of a corresponding error variable, designated by e. A difference calculator 122 is configured to calculate the current value of the respective error variable e as a difference between a current value of a corresponding reference variable, designated **by r,** and a current value of a corresponding observed variable y from the sub-system 10. The reference variable r defines a target value or set point of the observed variable y. The control device 12 comprises a target generator 123, which is configured to generate and provide a signal representing the reference variable r to the difference calculator 122. FIG. 2 is a conventional representation of a control device 12 that is configured for closed-loop control. The controller 121 may comprise any type of closed-loop control algorithm, such as proportional (P), proportional-derivative (PD), or proportional-integral-derivative (PID). To achieve a desired dynamic behavior of the closed-loop control, one or more control parameters of the control algorithm (F) in the controller 121 need to be adjusted in relation to the processing operation (G) of the sub-system 10. This adjustment is performed iteratively and is commonly denoted "tuning". In the example of a PID algorithm, the desired dynamics may be obtained by adjusting three control parameters or "gains": a proportional gain, an integration gain, and a derivative gain. In the following, the value of one or more control parameters for a control device 12 is denoted control parameter data, CPD.

In some embodiments, the control device 12 is also operable to perform open-loop control, by use of a different control algorithm in the controller 121 and by configuring the difference calculator 122 to provide the reference variable(s) r to the controller 121 instead of the error variable(s) e.

The present disclosure relates to a technique of facilitating the time-consuming work of tuning the control devices 12 in a food production plant 1. The technique is based on the insight that tuning may be facilitated by the provision of a "digital twin" of the processing operation by the sub-system 10 to be controlled. A digital twin is a virtual representation that serves as a real-time digital counterpart of a physical process. Determining the digital twin is thus equivalent to determining an operative process model for the sub-system 10. In the example of FIG. 2, such a process model will define the transfer function G of the sub-system 10. When process model is available, the transfer function F of the controller 121 may be determined by use of a computer device, for example by trial-and-error tuning by an operator or by use of an existing algorithm for so-called automatic tuning, automated tuning or auto-tuning. Examples of automatic tuning algorithms include, without limitation, Ziegler-Nichols tuning, Åström-Hägglund tuning, Nyquist tuning, lambda tuning, and internal model control (IMC) tuning. Further examples of automatic tuning algorithms are given in the articles "Automatic tuning and adaptation for PID controllers - a survey", by Åström et al., published in IFAC Proceedings Volumes, Volume 25, Issue 14, pp 371-376 (1992), and "An Experimental Comparison of PID Autotuners", by Berner et al., published in Control Engineering Practice, 73, pp 124-133 (2018), which are incorporated herein by reference.

Thus, by provision of the digital twin, the tuning of the control device 12 may be performed separately from the physical sub-system 10, in a computer device.

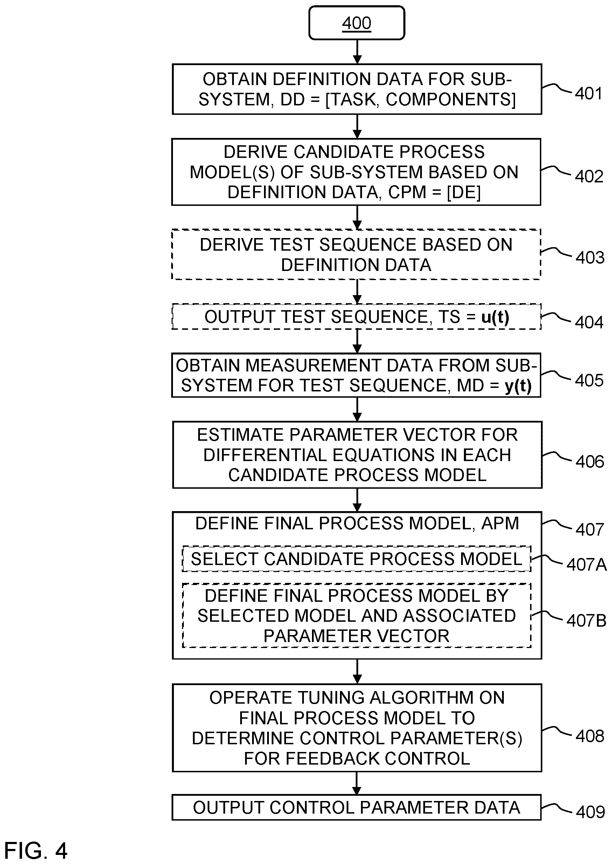

The digital twin, i.e. the process model, is also determined by use of a computer device, which may or may not be the same as used for the tuning, based on measurement data obtained from the sub-system 10. More details are given below with reference to FIG. 4.

FIG. 3 is a diagrammatic representation of a machine 30, which is configured to determine a process model for a sub-system 10 and determine control parameter data, CPD, for a control device 12 that is designated to control the operation to the sub-system 10. The machine 30 thus corresponds to the above-mentioned computer device. The machine 30 comprises processing circuitry 31, for example a central processing unit (CPU), a graphics processing unit (GPU), a digital signal processor (DSP), a microcontroller, one or more application specific integrated circuits (ASICs), a field programmable gate array (FPGA), or any combination thereof. The machine 30 further comprises system memory 32, which may include computer memory in the form of volatile and/or non-volatile memory such as read only memory (ROM), random access memory (RAM), or flash memory. The memory 32 may store computer instructions (e.g. software or program code) for causing the machine 30 to perform any one of the methodologies discussed herein. The instructions may be supplied to the machine 30 on a computer-readable medium, which may be a tangible (non-transitory) product (e.g. magnetic medium, optical medium, read-only memory, flash memory, digital tape, etc.) or a propagating signal.

The machine 30 also comprises an I/O interface 33 for connection to a user interface (UI) system 34, which enables user interaction. Generally, the UI system 34 comprises a presentation device configured to present output data from the machine 30 to the user and an input device configured to allow the user to enter input data to the machine 30. For example, the UI system 34 may comprise one or more of a keyboard, keypad, computer mouse, control button, printer, microphone, display device, indicator lamp, speaker, touch screen, camera, voice control system, gesture control system, USB port, etc.

In the example of FIG. 3, the input data comprises definition data (DD) and measurement data (MD), and the output data comprises a test sequence (TS) and control parameter data (CPD). The input and output data will be described in detail below with reference to FIG. 4. As indicated in FIG. 3, MD is generated by the feedback component(s) 11B of the sub-system 10. Specifically, MD is generated in response to the sub-system 10 being operated in accordance with TS, for example by the control device 12. In the illustrated example, a local interface (LI) device 13 is provided to enable data entry into the control device 12. The LI device 13 may be integrated into the control device 12 or be a separate unit which is connected for communication with the control device 12, by wire or wirelessly. The user may transfer TS to the control device 12 via the LI device 13. In the example of FIG. 3, MD is obtained directly from the component(s) 11B, although it may alternatively be output to the user via the LI device 13.

As shown, the machine 30 may further comprise a signal interface 33' for wired or wireless communication with the control device 12 by any suitable protocol. For example, the machine 30 may be configured to output instructions on the interface 33' to cause the control device 12 to perform TS and/or receive MD from the control device 12 via the interface 33'. Alternatively or additionally, the machine 30 may transmit the CPD to the control device 12 via the interface 33', causing the control device 12 to configure its controller 121 accordingly. The signal interface 33' may be combined with the I/O interface 33 into a single physical interface.

FIG. 4 is a flowchart of an example method 400 of configuring a control device for closed-loop control in a food production plant. The method 400 may be performed by the machine 30 and will be described with reference to the example in FIG. 3. The method 400 allows a user to interact with the machine 30 to cause it to determine the above-mentioned digital twin of the sub-system 10. The method 400 also allows the user to perform or initiate a tuning operation to determine control parameter data (CPD in FIG. 3) for the control device. In FIG. 4, optional steps are represented by dashed lines.

In step 401, definition data (DD in FIG. 3) for the sub-system 10 to be controlled is obtained. The definition data is indicative of the task to be performed by the sub-system 10 and the relevant equipment in the sub-system 10 that is involved in performing the task, i.e. a combination of components. The definition data may take any form and may define the task and the relevant equipment on any level of detail. In some embodiments, the task is defined by including the controllable variable(s) u and the observed variable(s) y in the definition data, i.e. the input to and the output from the processing operation in the sub-system 10. The components in the sub-system 10 may, depending on implementation, be defined by category, sub-category, performance, model, serial number, etc. The category may indicate the type of component, for example pump, valve, heater, heat exchanger, etc. The sub-category may further differentiate components of the same type. For example, for a pump, the sub-category may distinguish between gear pumps, impeller pumps, centrifugal pumps, etc. The performance may be defined in different ways for different components. For a pump, the performance may indicate the pumping capacity.

Step 401 may involve the user manually entering the definition data for the respective component. It is also conceivable that the user provides the definition data by selecting components from a library of predefined components for the plant, or even by selecting among predefined groups of components, where each group may correspond to an actual or potential sub-system in the plant. For example, the user selection may be made in a graphical user interface presented on the UI system 34.

In step 402, according to the invention, a plurality of candidate process models (CPM) of the sub-system 10 is derived based on the definition data. Such a CPM is a dynamic model that comprises one or more differential equations ([DE]) that represent the task to be performed by use of the relevant equipment in the sub-system 10. In some embodiments, CPMs are predefined and stored in a database, which is accessible to the machine 30. The database may associate different identifiers, given by the definition data, with one or more CPMs. Thus, step 402 may comprise determining one or more identifiers based on the definition data, and searching the database by use of the identifier(s) to retrieve one or more CPMs that are stored in the database in association with the identifier(s). The identifier(s) may be included in the definition data, for example as a model identifier, a serial number or any other unique or semi-unique identifier. Alternatively, the identifier(s) may be generated algorithmically based on the content of the definition data. In alternative embodiments, CPMs are generated on demand, for example by operating a machine learning-based (ML) algorithm on the definition data, or part thereof. The ML algorithm may be trained based on a large variety of pairs of DD and CPM.

Such a CPM may comprise an ordinary differential equation (ODE) and/or a partial differential equation (PDE). The respective differential equation may be linear or non-linear and of any order. Typically, but not necessarily, at least one differential equation of the CPM has time as an independent variable and comprises a time-derivative of any order.

In some embodiments, the one or more differential equations of the CPM comprise the controllable variable(s) u and the observed variable(s) y of the sub-system, as well as a set of constant parameters or coefficients. The respective constant parameter does not vary with time. The value of the respective constant parameter is unknown in the plurality of CPMs that is derived in step 402.

Such a CPM may be a so-called tailor-made model, also known as mechanistic model, which is defined from basic physical principles and in which the constant parameters represent system parameters that, at least in principle, have a physical interpretation. However, to make the method 400 more generally applicable and simple to implement, the CPM may be a so-called black-box model, also known as a ready-made model. Generally, the constant parameters of a black-box model have no direct physical interpretation but are used to describe properties of the input-output relationships of the sub-system. A large number of black-box models are available. These are standard models, which by experience are known to handle a wide range of different system dynamics. Examples of linear black-box model types include Box-Jenkins (BJ), Output Error (OE), ARMAX, and ARX. All of these black-box model types comprises a set of structural parameters that define the black-box model. Thus, different black-box models are obtained for different values of the structural parameters. The set of structural parameters may define the dynamics of the model, for example in terms of its order, delay values, etc. Examples of linear and non-linear black-box models are, for example, found in the article "Black-box models from input-output measurements", by Ljung, L., published in Proceedings of the 18th IEEE Instrumentation and Measurement Technology Conference, Volume 1, pp 138-146 (2001), and references cited therein.

In alternative, non-claimed, embodiments, step 402 derives a single CPM for the sub-system 10 and provides the single CPM for processing by subsequent steps (cf. steps 406-407, below). This may improve speed and processing-efficiency of the method 400.

According to the invention, step 402 derives a plurality of CPMs for the sub-system 10, which are processed and evaluated by subsequent steps for selection of the best CPM for the sub-system 10. This may improve accuracy of the resulting digital twin and thereby improve performance of the control device 12 after tuning.

In step 405, the method obtains measurement data (MD in FIG. 3). As explained in relation to FIG. 3, MD is generated in response to the sub-system 10 being operated in accordance with a test sequence (TS in FIG. 3). MD thereby represents how the sub-system 10 reacts to stimuli. In some embodiments, TS defines a temporal variation of the controllable variable(s), u(t), and MD comprises the resulting response of the observed variable(s) y(t). For example, TS may define a step change in the respective controllable variable **u,** causing MD to represent the resulting step change in the observed variable(s) y. Alternatively or additionally, TS may define an oscillation, positive and negative changes, a ramp change, etc.

As indicated in FIG. 4, TS may be derived in a step 403 and output in a step 404 to be applied by the sub-system 10 for generation of MD. TS may be derived by analogy with the CPM in step 402. In one example, TS is derived from a database based on one or more identifiers derived from the definition data. In another example, TS is derived by operating an ML algorithm on the definition data, or part thereof.

The test sequence may be output in different formats in step 404. In some embodiments, TS is presented to the user on a presentation device of the UI system 34. Here, TS may be given by values of characteristic parameters that define **u(t),** for example magnitude of change, rise time, fall time, frequency of oscillation, magnitude of oscillation, etc. The user may then manually enter the values of the characteristic parameters into the control device 12 via the LI device 13 in FIG. 3. In some embodiments, TS is electronically transferred to the control device 12 via the signal interface 33' in FIG. 3. Here, TS may be given by any form of control data that causes the control device 12 to operate the sub-system 10 in accordance with TS. In some embodiments, TS is transferred to an auxiliary control device, for example a handheld device, via the signal interface 33', whereupon the auxiliary control device is connected to the sub-system 10 to operate it in accordance with TS.

It is to be noted that steps 403-404 are optional. TS may be made available to the user in other ways and applied to the sub-system. For example, TS may be standardized for all sub-systems, for groups of sub-systems, or for individual sub-systems. The user may determine TS through a printed manual or a separate digital look-up system and then configure the control device 12 or the auxiliary control device to operate the sub-system 10 in accordance with TS.

The measurement data is generated to represent the processing operation of the sub-system 10 (cf. G in FIG. 3). Thereby, MD should be generated without closed-loop control of the sub-system 10. Thus, when the sub-system 10 is operated in accordance with TS, the control device 12 is configured to switch to open-loop control. Likewise, the auxiliary control device, if used, is configured to perform open-loop control.

Step 405 may obtain the measurement data is various ways. In some embodiments, MD is manually entered by the user via an input device in the UI system 34, for example in the form of values of characteristic parameters that define y(t). Alternatively, MD may be stored on a storage medium, for example a USB memory, and manually transferred to the machine 30. In some embodiments, MD is electronically transferred to the control device 12 via the signal interface 33' in FIG. 3. In some embodiments, the auxiliary control device is connected to the machine 30 at the signal interface 33' and operated to transfer MD.

Step 405 may pre-process the measurement data, for example by applying one or more filters, before it is provided for use by step 406.

In step 406, values of the unknown constant parameters of the CPM, which was derived in step 402, are estimated based on the test sequence and the measurement data. Specifically, values of the constant parameters are estimated so that the CPM, when its differential equations are configured with these values, reproduces MD as closely as possible when operated on TS. In other words, the set of constant parameters are determined to make the CPM reproduce the dynamic behavior represented by the combination of TS and MD. Step 406 may use any suitable algorithm for fitting parameterized models to data. Such an algorithm is denoted fitting algorithm (FA) herein. Examples of fitting algorithms include, without limitation, regression-based algorithms, statistical algorithms and iterative algorithms. The fitting algorithm may generally be seen to output a parameter vector (PV) containing the estimated values of the unknown constant parameters. Thus, in some embodiments, step 406 comprises operating the fitting algorithm on the CPM, given TS and MD, to determine a PV. As noted, the fitting algorithm may be iterative. Such a fitting algorithm may be configured to modify PV until the CPM, when configured by PV, is deemed to produce MD from TS. The best PV is then output by the fitting algorithm.

As noted above, step 402 may derive a plurality of CPMs. In such embodiments, step 406 may process each of the CPMs from step 402 for determination of a respective PV containing estimated values of the constant parameters. Depending on implementation, step 406 may provide every combination of PV and CPM for further processing or remove combinations of PV and CPM that are unable to produce MD from TS with sufficient accuracy.

In step 407, a final or actual process model (APM) is defined for the sub-system 10 based on the one or more combinations of PV and CPM from step 406. The APM is the above-mentioned digital twin. If step 406 provides PV for a single CPM, the APM may be defined by configuring the CPM by the values according to the PV, i.e., by inserting the estimated values of the constant parameters in the differential equation(s) of the CPM.

If step 406 provides a plurality of combinations of PV and CPM, step 407 may comprise a step 407A of selecting one of the CPMs based on a selection criterion, and a step 407B of defining the APM based on the selected CPM and its associated PV. For example, the selection in step 407B may be performed by operating the respective CPM, configured by its associated PV, in accordance with the TS to generate virtual or "synthetic" measurement data. The synthetic measurement data is then compared to MD to generate a performance score that represents the similarity between the synthetic measurement data and MD. One of the CPMs is then selected based on the performance score for the respective CPM. In a variant, step 407B is performed as part of step 406, by the performance score being generated by the fitting algorithm.

In some embodiments of step 405, the incoming measurement data is divided into two disjoint subsets, with a first subset being designated for use in step 406 to estimate PV, and a second subset being designated for use in step 407B to generate the performance score. This may improve the relevance of the performance score.

In step 408, a tuning algorithm (TA) is operated on the APM to determine the one or more control parameters of the control algorithm for closed-loop control in the controller 121 (FIG. 3). Step 408 is straight-forward when the APM is available and may use any conventional tuning algorithm. For example, step 408 may implement a tuning algorithm that allows the user to perform tuning by trial-and-error or a tuning algorithm for automatic tuning.

In step 409, control parameter data (CPD) comprising the control parameter value(s) determined in step 408 is output for installation in the control device 12. The CPD may be transferred to the control device 12 by analogy with TS. For example, CPD may be manually entered via the LI device 13 or electronically transferred via the signal interface 33'.

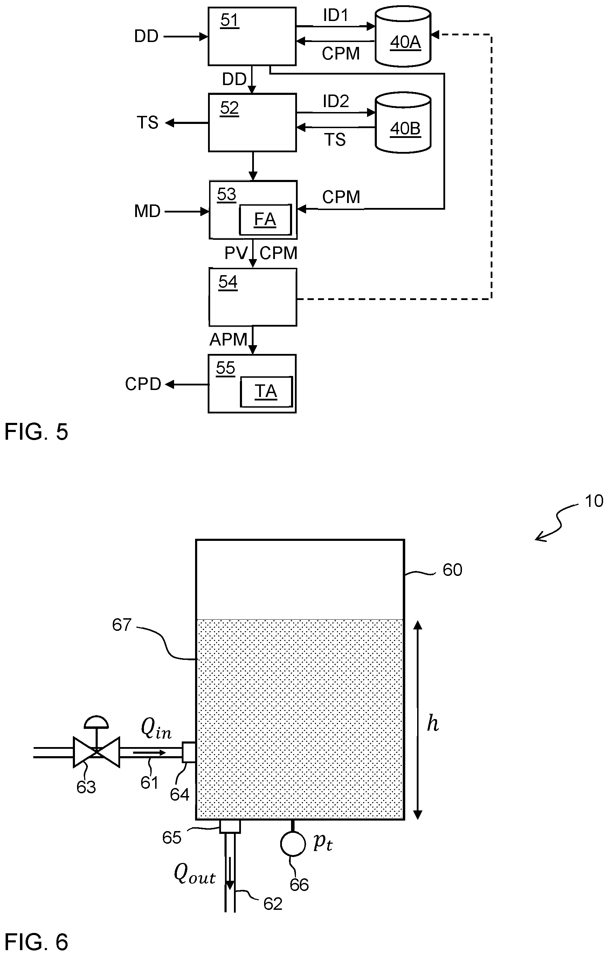

FIG. 5 is a schematic block diagram of a structure for implementing the method 400, for example in the machine 30 (FIG. 3). Each block in FIG. 5 may be implemented by processing circuitry or a combination of processing circuitry and computer instructions.

A first block 51 is configured to perform steps 401 and 402. In the illustrated example, DD is input by a user to block 51, which is configured to process DD to determine a first identifier ID1. Block 51 is further configured retrieve one or more CPMs by use of ID1 from a database 40A. The database 40A may be located in the internal memory 32 of the machine 30 or in external memory.

A second block 52 is configured to perform steps 403 and 404. In the illustrated example, DD is received by block 52 from block 51. Block 52 is configured to process DD to determine a second identifier ID2. Block 52 is further configured retrieve TS by use of ID2 from a database 40B. TS is then output by block 52. The database 40B may be located in the internal memory 32 of the machine 30 or in external memory. In a variant, the databases 40A, 40B may be merged into a single database, in which CPM and TS may be retrieved by use of a single identifier.

A third block 53 is configured to perform steps 405 and 406 by use of MD and the one or more CPMs derived by block 51. As shown, block 53 comprises a fitting algorithm (FA) and is configured to operate the fitting algorithm on MD and the one or more CPMs to estimate PV for the respective CPM.

A fourth block 54 is configured to perform step 407 to define the APM by use of one or more pairs of CPM and PV provided by block 53. As indicated by a dashed arrow, block 54 may be further configured to update the data record associated with ID1 in the database 40A based on the outcome of step 406. For example, if a CPM results in a low performance score, the CPM may be removed from the data record. Conversely, one or more CPMs may be added to data record based on the performance scores for different CPMs. Thus, by block 54, the structure in FIG. 5 implements a learning function that may improve performance over time. The learning function may alternatively be implemented by block 54.

A fifth block 55 is configured to perform steps 408-409 by use of APM from block 54. As shown, block 55 comprises a tuning algorithm (TA) and is configured to operate the tuning algorithm on APM to determine CPD. Block 55 is configured to output the thus-determined CPD for installation in the control device.

FIGS 6 is included to present a simple example of a sub-system 10 and an associated task. In FIG. 6A, the sub-system 10 comprises a tank 60, an inlet pipe 61, an outlet pipe 62, a valve 63 and a pressure sensor 66, which are components of the sub-system 10. The inlet pipe 61 is connected to a fluid port 64 in a sidewall of the tank 60, and the outlet pipe 62 is connected to a fluid port 65 in a bottom wall of the tank 60. The valve 63 is arranged in the inlet pipe 61. The task of the sub-system 10 is to hold a fluid 67 at a given level (h) in the tank 60. The level in the tank is affected by the inflow of fluid (Qᵢₙ) through the inlet pipe 61 and the outflow of fluid (Qₒᵤₜ) through the outlet pipe 62. The outflow depends on the head pressure (pt) measured by the pressure sensor 66. The skilled person realizes that a tailor-made model may be created for the task of maintaining a given fluid level (h) in the tank 60, with the observed variable being the head pressure (pt) and the controllable variable being the inflow (Qin). Such a tailor-made model includes a set of constant parameters, which are unknown and may be determined based on physical properties of the sub-system 10 and its components. The set of constant parameters may alternatively, by including the tailor-made model as a CPM in the method 400, be determined in accordance with step 403 based on measurement data (pt) that is generated for a test sequence that defines a time variation of the inflow (Qᵢₙ) as controlled by the valve 63. The skilled person also understands that, with basic knowledge about the dynamics of the sub-system 10, one or more black-box models may be defined for the task of maintaining a given fluid level (h) in the tank 60. In a first example, the black-box model is defined as an ARX model with structural parameters na = 1 and nb = 1. In a second example, the black-box model is defined as an ARMAX model with structural parameters na = 1, nb = 1 and nc = 0. In a third example, the black-box model is defined as a BJ model with structural parameters nb = 1, nc = 0, nd = 1 and nf = 1. In a fourth example, the black-box model is defined as an OE model with structural parameters nb = 1 and nf = 1. These models also comprises a structural parameter nk, which defines a delay and which may be set to different values, thereby resulting in different CPMs in the context of the method 400. Like the tailor-made model, each black-box model comprises a set of constant parameters, which are unknown and may be determined in accordance with step 403.

## Claims

1. A computer-implemented method of configuring a control device (12) for closed-loop control in a plant (1) for production of food products (P), said method comprising the steps of:
obtaining (401) definition data (DD) for a sub-system (10), which is included in the plant and is operated by the control device (12), wherein the definition data (DD) is indicative of
- a task to be performed by of the sub-system (10) in the production of the food products (P), and
- a combination of components (11A, 11B, 11) included in the sub-system (10) to perform the task;
deriving (402), based on the definition data (DD), a candidate process model (CPM) of the sub-system (10) comprising one or more differential equations that represent the task to be performed by the sub-system (10) by use of the combination of components (11A, 11B, 11) in the production of the food products (P);
obtaining (405) measurement data (MD) that is generated by the sub-system (10) when operated in accordance with a test sequence (TS);
estimating (406) a set of constant parameters of the one or more differential equations based on the test sequence (TS) and the measurement data (MD);
defining (407) a final process model (APM) for the sub-system (10) based on the one or more differential equations and the set of constant parameters; and
operating (408) a tuning algorithm on the final process model (APM) to determine one or more control parameters (CPD) of the control device (12) for the closed-loop control, **characterized in that**
said step of estimating (406) the set of constant parameters comprises operating a fitting algorithm (FA) on the candidate process model (CPM), given the test sequence (TS) and the measurement data (MD), to determine a parameter vector (PV) that contains estimated values of the set of constant parameters, wherein
the fitting algorithm (FA) is configured to modify the parameter vector (PV) until the candidate process model (CPM), when configured by the parameter vector (PV), is deemed to produce the measurement data (MD) from the test sequence (TS), and subsequently output the parameter vector (PV), and
said step of deriving (402) comprises deriving a plurality of candidate process models (CPM) of the sub-system (10) based on the definition data (DD), and wherein
said step of estimating (406) comprises operating the fitting algorithm (FA) on each of the candidate process models (CPM), given the test sequence (TS) and the measurement data (MD), to determine a respective parameter vector (PV), and wherein said defining (407) comprises: selecting (407A) one of the candidate process models (CPM), and defining (407B) the final process model (APM) based on the one or more differential equations of the thus-selected candidate process model (CPM) and its parameter vector (PV).

2. The method of claim 1, wherein the task is defined by one or more controllable variables (u) of the sub-system (10) and one or more observed variables (y) of the sub-system (10).

3. The method of claim 2, wherein the one or more differential equations comprise the one or more controllable variables (u), the one or more observed variables (y), and the set of constant parameters.

4. The method of claim 2 or 3, wherein the one or more observed variables (y) comprises at least one or a flow rate, a temperature, a pressure, or a fluid level.

5. The method of claim 2, 3 or 4, wherein the one or more controllable variables (u) comprises a control signal for at least one of a valve, a pump, a flow controller, a heat exchanger, or a heater.

6. The method of any one of claims 2-5, wherein the test sequence (TS) defines a variation of the one or more controlled variables (u).

7. The computer-implemented method of any preceding claim, wherein said deriving (402) a candidate process model (CPM) comprises: retrieving the candidate process model (CPM) by searching, based on one or more identifiers (ID1) given by the definition data (DD), a database (40A) that stores a plurality of predefined candidate process models.

8. The computer-implemented method of any preceding claim, further comprising: presenting (404) the test sequence on a presentation device (34), or causing the control device (12) to operate, by open-loop control, the sub-system (10) to perform the test sequence (TS).

9. The method of claim 8, further comprising: deriving (403) the test sequence based on the definition data (DD).

10. The computer-implemented method of any preceding claim, wherein the candidate process model (CPM) is a black-box model.

11. The computer-implemented method of claim 1, wherein said selecting (407A) comprises: operating a respective candidate process model (CPM), configured by its respective parameter vector (PV), in accordance with the test sequence (TS) to generate synthetic measurement data; determining a performance score based on the synthetic measurement data and the measurement data (MD); and selecting said one of the candidate process models (CPM) based on the performance score for the respective candidate process model (CPM).

12. The computer-implemented method of any preceding claim, wherein the one or more control parameters (CPD) are configured to cause the control device (12) to perform closed-loop control of the one or more controllable variables (u) to achieve a target value (r) of the one or more observed variables (y).

13. A computer-readable medium comprising computer instructions which, when executed on processing circuitry (31), causes the processing circuitry (31) to perform the method of any one of claims 1-12.

14. A computer device (30) comprising processing circuitry (31) configured to perform the method of any one of claims 1-12, and a signal interface (33) for obtaining the definition data (DD) and the measurement data (MD).

## Patentansprüche

1. Computerimplementiertes Verfahren zum Konfigurieren einer Steuervorrichtung (12) zur Steuerung im geschlossenen Regelkreis in einer Anlage (1) zur Produktion von Nahrungsmittelprodukten (P), wobei das Verfahren die folgenden Schritte umfasst:
Beziehen (401) von Definitionsdaten (DD) für ein Teilsystem (10), das in der Anlage enthalten ist und durch die Steuervorrichtung (12) betrieben wird, wobei die Definitionsdaten (DD) Folgendes angeben:
- eine durch das Teilsystem (10) bei der Produktion der Nahrungsmittelprodukte (P) durchzuführende Aufgabe und
- eine Kombination aus Komponenten (11A, 11B, 11), die in dem Teilsystem (10) enthalten sind, um die Aufgabe durchzuführen;
Ableiten (402) eines Kandidatenprozessmodells (CPM) des Teilsystems (10), basierend auf den Definitionsdaten (DD), umfassend eine oder mehrere Differentialgleichungen, welche die Aufgabe darstellen, die durch das Teilsystem (10) durchzuführen ist, unter Verwendung der Kombination aus Komponenten (11A, 11B, 11) bei der Produktion der Nahrungsmittelprodukte (P);
Beziehen (405) von Messdaten (MD), die durch das Teilsystem (10) erzeugt werden, wenn es gemäß einer Testsequenz (TS) betrieben wird;
Schätzen (406) eines Satzes konstanter Parameter der einen oder mehreren Differentialgleichungen, basierend auf der Testsequenz (TS) und den Messdaten (MD);
Definieren (407) eines finalen Prozessmodells (APM) für das Teilsystem (10), basierend auf der einen oder den mehreren Differentialgleichungen und dem Satz konstanter Parameter; und
Abarbeiten (408) eines Abstimmalgorithmus an dem finalen Prozessmodell (APM), um einen oder mehrere Steuerparameter (CPD) der Steuervorrichtung (12) für die Steuerung im geschlossenen Regelkreis zu bestimmen, **dadurch gekennzeichnet, dass**
der Schritt des Schätzens (406) des Satzes konstanter Parameter das Abarbeiten eines Anpassungsalgorithmus (FA) an dem Kandidatenprozessmodell (CPM) bei gegebener Testsequenz (TS) und gegebenen Messdaten (MD) umfasst, um einen Parametervektor (PV) zu bestimmen, der geschätzte Werte des Satzes konstanter Parameter beinhaltet, wobei
der Anpassungsalgorithmus (FA) dafür konfiguriert ist, den Parametervektor (PV) zu modifizieren, bis das Kandidatenprozessmodell (CPM), wenn durch den Parametervektor (PV) konfiguriert, als die Messdaten (MD) aus der Testsequenz (TS) produzierend erachtet wird, und danach den Parametervektor (PV) auszugeben, und
der Schritt des Ableitens (402) das Ableiten einer Vielzahl von Kandidatenprozessmodellen (CPM) des Teilsystems (10), basierend auf den Definitionsdaten (DD), umfasst, und wobei
der Schritt des Schätzens (406) das Abarbeiten des Anpassungsalgorithmus (FA) an jedem der Kandidatenprozessmodelle (CPM) bei gegebener Testsequenz (TS) und gegebenen Messdaten (MD) umfasst, um einen jeweiligen Parametervektor (PV) zu bestimmen, und wobei das Definieren (407) Folgendes umfasst: Auswählen (407A) eines der Kandidatenprozessmodelle (CPM) und Definieren (407B) des finalen Prozessmodells (APM), basierend auf der einen oder den mehreren Differentialgleichungen des so ausgewählten Kandidatenprozessmodells (CPM) und seines Parametervektors (PV).

2. Verfahren nach Anspruch 1, wobei die Aufgabe durch eine oder mehrere steuerbare Variablen (u) des Teilsystems (10) und eine oder mehrerer beobachtete Variablen (y) des Teilsystems (10) definiert wird.

3. Verfahren nach Anspruch 2, wobei die eine oder die mehreren Differentialgleichungen die eine oder die mehreren steuerbaren Variablen (u), die eine oder die mehreren beobachteten Variablen (y) und den Satz konstanter Parameter umfassen.

4. Verfahren nach Anspruch 2 oder 3, wobei die eine oder die mehreren beobachteten Variablen (y) mindestens eines oder eine Durchflussmenge, eine Temperatur, einen Druck oder einen Fluidpegel umfassen.

5. Verfahren nach Anspruch 2, 3 oder 4, wobei die eine oder die mehreren steuerbaren Variablen (u) ein Steuersignal für mindestens eines von einem Ventil, einer Pumpe, einer Durchflusssteuerung, einem Wärmetauscher oder einem Heizelement umfassen.

6. Verfahren nach einem der Ansprüche 2 bis 5, wobei die Testsequenz (TS) eine Abweichung der einen oder mehreren gesteuerten Variablen (u) definiert.

7. Computerimplementiertes Verfahren nach einem der vorhergehenden Ansprüche, wobei das Ableiten (402) eines Kandidatenprozessmodells (CPM) Folgendes umfasst: Abrufen des Kandidatenprozessmodells (CPM) mittels Durchsuchens einer Datenbank (40A), die eine Vielzahl vordefinierter Kandidatenprozessmodelle speichert, basierend auf einer oder mehreren Kennungen (ID1), die durch die Definitionsdaten (DD) gegeben sind.

8. Computerimplementiertes Verfahren nach einem der vorhergehenden Ansprüche, ferner Folgendes umfassend: Präsentieren (404) der Testsequenz auf einer Präsentationsvorrichtung (34) oder Bewirken, dass die Steuervorrichtung (12) durch Steuerung im geschlossenen Regelkreis das Teilsystem (10) betreibt, um die Testsequenz (TS) durchzuführen.

9. Verfahren nach Anspruch 8, ferner Folgendes umfassend: Ableiten (403) der Testsequenz, basierend auf den Definitionsdaten (DD).

10. Computerimplementiertes Verfahren nach einem der vorhergehenden Ansprüche, wobei das Kandidatenprozessmodell (CPM) ein Black-Box-Modell ist.

11. Computerimplementiertes Verfahren nach Anspruch 1, wobei das Auswählen (407A) Folgendes umfasst: Betreiben eines jeweiligen Kandidatenprozessmodells (CPM), das durch seinen jeweiligen Parametervektor (PV) konfiguriert ist, gemäß der Testsequenz (TS), um künstliche Messdaten zu erzeugen; Bestimmen eines Leistungspunktwerts, basierend auf den künstlichen Messdaten und den Messdaten (MD); und Auswählen des einen der Kandidatenprozessmodelle (CPM), basierend auf dem Leistungspunktwert für das jeweilige Kandidatenprozessmodell (CPM).

12. Computerimplementiertes Verfahren nach einem der vorhergehenden Ansprüche, wobei der eine oder die mehreren Steuerparameter (CPD) dafür konfiguriert sind zu bewirken, dass die Steuervorrichtung (12) die Steuerung der einen oder mehreren steuerbaren Variablen (u) im geschlossenen Regelkreis durchführt, um einen Sollwert (r) der einen oder mehreren beobachteten Variablen (y) zu erreichen.

13. Computerlesbares Medium, Computeranweisungen umfassend, die bei Ausführung in einer Verarbeitungsschaltung (31) bewirkt, dass die Verarbeitungsschaltung (31) das Verfahren nach einem der Ansprüche 1 bis 12 durchführt.

14. Computervorrichtung (30), umfassend eine Verarbeitungsschaltung (31), die dafür konfiguriert ist, das Verfahren nach einem der Ansprüche 1 bis 12 durchzuführen, und eine Signalschnittstelle (33) zum Beziehen der Definitionsdaten (DD) und der Messdaten (MD) .

## Revendications

1. Procédé, mis en œuvre par ordinateur, de configuration d'un dispositif de commande (12) pour une commande en boucle fermée dans une installation (1) de production de produits alimentaires (P), ledit procédé comprenant les étapes suivantes :
obtention (401) de données de définition (DD) pour un sous-système (10), qui est inclus dans l'installation et que fait fonctionner le dispositif de commande (12), les données de définition (DD) indiquant
- une tâche à réaliser par le sous-système (10) lors de la production des produits alimentaires (P), et
- une combinaison de composants (11A, 11B, 11) inclus dans le sous-système (10) pour réaliser la tâche ;
dérivation (402), sur la base des données de définition (DD), d'un modèle de processus candidat (CPM) du sous-système (10) comprenant une ou plusieurs équations différentielles qui représentent la tâche à réaliser par le sous-système (10) au moyen de la combinaison de composants (11A, 11B, 11) lors de la production des produits alimentaires (P) ;
obtention (405) de données de mesure (MD) qui sont générées par le sous-système (10) lorsqu'il fonctionne conformément à une séquence de test (TS) ;
estimation (406) d'un ensemble de paramètres constants des une ou plusieurs équations différentielles sur la base de la séquence de test (TS) et des données de mesure (MD) ;
définition (407) d'un modèle de processus final (APM) pour le sous-système (10) sur la base des une ou plusieurs équations différentielles et de l'ensemble de paramètres constants ; et
application (408) d'un algorithme de réglage sur le modèle de processus final (APM) pour déterminer un ou plusieurs paramètres de commande (CPD) du dispositif de commande (12) pour la commande en boucle fermée, **caractérisé en ce que**
ladite étape d'estimation (406) de l'ensemble de paramètres constants comprend l'application d'un algorithme d'ajustement (FA) sur le modèle de processus candidat (CPM), compte tenu de la séquence de test (TS) et des données de mesure (MD), pour déterminer un vecteur de paramètres (PV) qui contient des valeurs estimées de l'ensemble de paramètres constants,
l'algorithme d'ajustement (FA) étant configuré pour modifier le vecteur de paramètres (PV) jusqu'à ce que le modèle de processus candidat (CPM), lorsqu'il est configuré par le vecteur de paramètres (PV), soit réputé produire les données de mesure (MD) à partir de la séquence de test (TS), et consécutivement fournir en sortie le vecteur de paramètres (PV), et
ladite étape de dérivation (402) comprend la dérivation d'une pluralité de modèles de processus candidats (CPM) du sous-système (10) sur la base des données de définition (DD), et
ladite étape d'estimation (406) comprenant l'application de l'algorithme d'ajustement (FA) sur chacun des modèles de processus candidats (CPM), compte tenu de la séquence de test (TS) et des données de mesure (MD), pour déterminer un vecteur de paramètres (PV) respectif, et ladite définition (407) comprenant : la sélection (407A) de l'un des modèles de processus candidats (CPM), et la définition (407B) du modèle de processus final (APM) sur la base des une ou plusieurs équations différentielles du modèle de processus candidat (CPM) ainsi sélectionné et de son vecteur de paramètres (PV).

2. Procédé selon la revendication 1, la tâche étant définie par une ou plusieurs variables commandables (u) du sous-système (10) et une ou plusieurs variables observées (y) du sous-système (10).

3. Procédé selon la revendication 2, les une ou plusieurs équations différentielles comprenant les une ou plusieurs variables commandables (u), les une ou plusieurs variables observées (y), et l'ensemble de paramètres constants.

4. Procédé selon la revendication 2 ou 3, les une ou plusieurs variables observées (y) comprenant un débit et/ou une température et/ou une pression et/ou un niveau de fluide.

5. Procédé selon la revendication 2, 3 ou 4, les une ou plusieurs variables commandables (u) comprenant un signal de commande pour une vanne et/ou une pompe et/ou un régulateur de débit et/ou un échangeur de chaleur et/ou un réchauffeur.

6. Procédé selon l'une quelconque des revendications 2 à 5, la séquence de test (TS) définissant une variation des une ou plusieurs variables commandées (u).

7. Procédé mis en œuvre par ordinateur selon l'une quelconque des revendications précédentes, ladite dérivation (402) d'un modèle de processus candidat (CPM) comprenant : la récupération du modèle de processus candidat (CPM) par exploration, sur la base d'un ou de plusieurs identifiants (ID1) donnés par les données de définition (DD), d'une base de données (40A) qui stocke une pluralité de modèles de processus candidats prédéfinis.

8. Procédé mis en œuvre par ordinateur selon l'une quelconque des revendications précédentes, comprenant en outre : la présentation (404) de la séquence de test sur un dispositif de présentation (34), ou l'ordre donné au dispositif de commande (12) de faire fonctionner, par commande en boucle ouverte, le sous-système (10) pour lui faire réaliser la séquence de test (TS).

9. Procédé selon la revendication 8, comprenant en outre : la dérivation (403) de la séquence de test sur la base des données de définition (DD).

10. Procédé mis en œuvre par ordinateur selon l'une quelconque des revendications précédentes, le modèle de processus candidat (CPM) étant un modèle à boîte noire.

11. Procédé mis en œuvre par ordinateur selon la revendication 1, ladite sélection (407A) comprenant : l'application d'un modèle de processus candidat (CPM), configuré par son vecteur de paramètres (PV) respectif, conformément à la séquence de test (TS) pour générer des données de mesure synthétiques ; la détermination d'un score de performance sur la base des données de mesure synthétiques et des données de mesure (MD) ; et la sélection dudit un des modèles de processus candidats (CPM) sur la base du score de performance pour le modèle de processus candidat (CPM) respectif.

12. Procédé mis en œuvre par ordinateur selon l'une quelconque des revendications précédentes, les un ou plusieurs paramètres de commande (CPD) étant configurées pour donner l'ordre au dispositif de commande (12) de réaliser une commande en boucle fermée des une ou plusieurs variables commandables (u) pour atteindre une valeur cible (r) des une ou plusieurs variables observées (y) .

13. Support lisible par ordinateur comprenant des instructions d'ordinateur qui, lorsqu'elles sont exécutées sur une circuiterie de traitement (31), amènent la circuiterie de traitement (31) à réaliser le procédé selon l'une quelconque des revendications 1 à 12.

14. Dispositif ordinateur (30) comprenant une circuiterie de traitement (31) configurée pour réaliser le procédé selon l'une quelconque des revendications 1 à 12, et une interface de signaux (33) destinée à obtenir les données de définition (DD) et les données de mesure (MD) .
